# NEUE EUROPÄISCHE PATENTSCHRIFT

(11) **EP 3 118 065 B2**
(45) Veröffentlichungstag und Bekanntmachung des Hinweises auf die Entscheidung über den Einspruch: **28.09.2022**
(45) Hinweis auf die Patenterteilung: 19.09.2018
(21) Anmeldenummer: 15176476.8
(22) Anmeldetag: 13.07.2015
(51) Int. Cl.: B60R 19/48, G01S 7/521, G01S 15/93

(54) **VERKLEIDUNGSBAUTEIL FÜR EIN FAHRZEUG UND VERFAHREN ZUM BEFESTIGEN UND AUSRICHTEN EINER SENSORAUFNAHME AN EINEM VERKLEIDUNGSBAUTEIL**
CLADDING COMPONENT FOR A VEHICLE AND METHOD FOR SECURING AND ALIGNING A SENSOR MOUNTING GROOVE ON A CLADDING COMPONENT
COMPOSANT D'HABILLAGE POUR UN VEHICULE ET PROCEDE DE FIXATION ET D'ALIGNEMENT D'UN LOGEMENT DE CAPTEUR SUR UN COMPOSANT D'HABILLAGE

(43) Veröffentlichungstag der Anmeldung: 18.01.2017
(73) Patentinhaber: SMP Deutschland GmbH, 79268 Bötzingen (DE)
(72) Erfinder: Bleile, Claus, 79227 Schallstadt (DE)
(74) Vertreter: Westphal, Mussgnug & Partner Patentanwälte mbB

(56) Entgegenhaltungen:
- EP-A1- 2 700 975
- EP-A2- 2 037 292
- EP-A2- 2 808 694
- EP-B1- 0 923 677
- WO-A1-2012/055713
- WO-A1-2013/091774
- WO-A1-2013/117262
- DE-A1-102011 011 588
- DE-A1-102011 105 013
- DE-T5-112009 004 942
- DE-T5-112012 005 811
- DE-U1- 29 900 980
- FR-A1- 2 950 943
- JP-A- 2013 221 880
- JP-A- 2015 113 099
- Manfred Rasche: "HANDBUCH KLEBETECHNIK /Passage/" In: "HANDBUCH KLEBETECHNIK", 1 January 2012 (2012-01-01), Carl Hanser Verlag München, Wien page 2pp, 23, 326,

## Beschreibung

Die vorliegende Erfindung betrifft ein Verkleidungsbauteil für ein Fahrzeug mit einer oder mehreren Durchgangsöffnungen und Sensoraufnahme wie es beispielsweise aus der DE 197 19 519 A1 bekannt ist. Weiterhin betrifft die Erfindung ein Verfahren zum Befestigen und Ausrichten eines Sensors und/oder einer Sensoraufnahme an diesem Verkleidungsbauteil eines Fahrzeugs gemäß Anspruch 8.

Viele Fahrzeuge weisen Assistenzsysteme auf, welche den Fahrer im Betrieb des Fahrzeugs unterstützen. Ein Beispiel derartiger Assistenzsysteme sind Einparkhilfen (PDC: Park Distance Control), bei denen der Fahrer beim Einparken eine optische und/oder akustische Mitteilung über den verbleibenden Abstand zu einem Gegenstand in der Nähe des Fahrzeugs bekommt, wodurch der Fahrer einen Aufprall mit dem Gegenstand und somit eine Beschädigung des Fahrzeugs und des Gegenstands verhindern und gleichzeitig den zur Verfügung stehenden Parkraum bestmöglich ausnutzen kann. Ein weiteres Beispiel sind Parklenkassistenten (PLA), bei denen das Fahrzeug automatisch in Längs- und Querparklücken gesteuert wird. Parklenkassistenten sind zudem in der Lage, das Fahrzeug aus Längsparklücken auszuparken. Parklenkassistenten unterstützen den Fahrer, indem sie selbsttätig die optimalen Lenkradbewegungen durchführen, um auf der Ideallinie ein- und auszuparken. Die Vermessung der Parklücke, die Zuweisung der Startposition und die Lenkbewegungen übernimmt der Parklenkassistent automatisch. Der Fahrer muss nur noch Gas geben und bremsen.

Die Funktionen dieser Assistenzsysteme basieren auf Daten, die von entsprechend ausgebildeten Sensoren, beispielsweise Radar- und/oder Ultraschallsensoren, erfasst werden. Diese Sensoren sind in oder an den Verkleidungsbauteilen des Fahrzeugs angeordnet, insbesondere im Stoßfänger und in der Seitenverkleidung des Fahrzeugs. Je nachdem, über welche Assistenzsysteme das Fahrzeug verfügt, sind unterschiedlich viele Sensoren notwendig. Typischerweise verfügen die Fahrzeuge allein im Stoßfänger über zwischen vier und sechs Sensoren. Die Genauigkeit der Assistenzsysteme und damit ihre Zuverlässigkeit hängen in besonderem Maße von der exakten Position und Ausrichtung eines jeden Sensors in Bezug auf die Verkleidungsbauteile und die übrigen Sensoren ab.

Die Verkleidungsbauteile weisen für jeden Fahrzeugtyp charakteristische Wölbungen auf. Zudem sind die Sensoren bei jedem Fahrzeugtyp an etwas anderen Stellen in oder an den Verkleidungsbauteilen angeordnet. Bislang werden die Sensoren mit Sensoraufnahmen an den Verkleidungsbauteilen befestigt, die Fügeflansche aufweisen, welche der Geometrie bzw. dem Verlauf der Wölbung der Verkleidungsbauteile an der entsprechenden Stelle entsprechen. Derartige Sensoraufnahmen sind in der EP 2 808 694 A2 offenbart. Somit ist es notwendig, für jede Stelle, an welcher der betreffende Sensor bzw. die Sensoraufnahme angeordnet werden soll, einen stellenspezifischen Fügeflansch bereitzustellen und vorzuhalten. Die hiermit verbundene relativ hohe Anzahl unterschiedlicher Sensoraufnahmen stellt sowohl einen konstruktiven als auch einen logistischen Aufwand dar, letzteres insbesondere deshalb, da bei der Fertigung sichergestellt werden muss, dass eine ausreichende Anzahl der benötigten Sensoraufnahmen vorgehalten wird. Zudem ist die Gefahr, dass die falschen Sensoraufnahmen verbaut werden, relativ hoch, da sich die stellenspezifischen Fügeflansche mitunter sehr ähneln und leicht verwechselt werden können. Da aber in diesem Fall die Geometrie des Fügeflansches nicht dem Verlauf des Verkleidungsbauteils entspricht, werden die geforderten Abzugskräfte nicht erreicht, so dass sich die Sensoraufnahme im Betrieb des Fahrzeugs vom Verkleidungsbauteil lösen kann.

Sensoraufnahmen mit Fügeflanschen, welche in Bereichen eines Verkleidungsbauteils angeordnet sind, die im Rahmen der technischen Möglichkeiten keine Wölbung aufweisen, sind in der WO 2012/055713 A1 und der WO 2013/091774 A1 offenbart.

Es ist daher Aufgabe einer Ausführungsform der vorliegenden Erfindung, ein Verkleidungsbauteil anzugeben, welche es ermöglicht, so viele baugleiche Sensoraufnahmen wie möglich zu verwenden und damit den fertigungstechnischen und logistischen Aufwand zu reduzieren.

Gelöst wird die Aufgabe mit den in Anspruch 1, 7 und 8 angegebenen Merkmalen. Vorteilhafte Ausführungsformen sind Gegenstand der Unteransprüche.

Eine Ausführungsform der Erfindung betrifft ein Verkleidungsbauteil für ein Fahrzeug, umfassend eine oder mehrere Durchgangsöffnungen, wobei die Durchgangsöffnungen im Bereich einer Wölbung des Verkleidungsbauteils angeordnet sind, eine oder mehrere Sensoraufnahmen zum Aufnehmen je eines Sensors oder mehrerer Sensoren, welche unter Ausbildung eines Freiraums zumindest teilweise beabstandet vom Verkleidungsbauteil im Bereich einer der Durchgangsöffnungen angeordnet sind, und ein Füll- und Befestigungsmittel zum Auffüllen des Freiraums im Bereich der Wölbung zwischen dem Verkleidungsbauteil und der Sensoraufnahme, zum Ausrichten der Sensoraufnahme in Bezug auf das Verkleidungsbauteil sowie zum Befestigen der Sensoraufnahme am Verkleidungsbauteil.

Die Sensoraufnahme kann dabei ein separates Bauteil sein, in welche der Sensor eingebracht werden kann. Alternativ kann die Sensoraufnahme integral mit der Wandung des Sensors ausgebildet sein. Die Bezeichnung "zumindest teilweise beabstandet" ist so zu verstehen, dass die Sensoraufnahme vollständig beabstandet zum Verkleidungsbauteil und insbesondere von der Wandung des Verkleidungsbauteils angeordnet sein kann oder das Verkleidungsbauteil je nach Verlauf der Wölbung des Verkleidungsbauteils an einer oder mehreren Stellen berühren kann, jeweils unter Ausbildung eines Freiraums zwischen dem Verkleidungsbauteil und der Sensoraufnahme. Das Füll- und Befestigungsmittel füllt den Freiraum zwischen dem Verkleidungsbauteil und der Sensoraufnahme unabhängig von der Geometrie des Verkleidungsbauteils aus, wenn sich letztere in ihrer gewünschten Position und Ausrichtung befindet, und stellt eine Verbindung zwischen dem Verkleidungsbauteil und der Sensoraufnahme dort her, wo sie sich nicht berühren. Demzufolge muss die Sensoraufnahme und insbesondere der Fügeflansch nicht mehr auf die Geometrie der Stelle des Verkleidungsbauteils, an welcher der Sensor angeordnet werden soll, angepasst werden. Es ist somit möglich, baugleiche Sensoraufnahmen für alle Stellen des Verkleidungsbauteils zu verwenden, an die Sensoren angeordnet werden sollen, wodurch der fertigungstechnische und logistische Aufwand durch eine Reduzierung der Vielfalt der verbauten Sensoraufnahmen deutlich gesenkt werden kann. Weiterhin werden Verwechslungen bei der Montage vermieden, so dass die Wahrscheinlichkeit, dass eine Sensoraufnahme an einer Stelle montiert wird, für die sie nicht passt, reduziert wird. Hierdurch lässt sich die Gefahr, dass sich die Sensoraufnahme im Betrieb des Fahrzeugs vom Verkleidungsbauteil löst, deutlich reduzieren.

Ein wesentlicher Kern der vorliegenden Erfindung ist es, dass das Füll- und Befestigungsmittel nicht nur den Freiraum ausfüllt und somit die Verwendung von baugleichen Sensoraufnahmen unabhängig von der Geometrie des Verkleidungsbauteils ermöglicht, sondern auch die Befestigung der Sensoraufnahme bewirkt. Durch eine entsprechende Verformung des Füll- und Befestigungsmittels werden geometriebedingte Abstandsunterschiede der Sensoraufnahme zum Verkleidungsbauteil ausgeglichen, so dass baugleiche Sensoraufnahmen für alle Verkleidungsbauteile unabhängig vom Verlauf ihrer Wölbung und unabhängig von der Stelle, an welcher die Sensoraufnahme am Verkleidungsbauteil befestigt werden soll, verwendet werden können. Hierdurch werden der Aufbau des Verkleidungsbauteils wie auch die Fertigung stark vereinfacht.

In einer Ausführungsform des erfindungsgemäßen Verkleidungsbauteils umfasst das Füll- und Befestigungsmittel einen Klebstoff zum Befestigen der Sensoraufnahme am Verkleidungsbauteil. Der Klebstoff muss nur an die entsprechende Stelle aufgetragen und die Sensoraufnahme in die gewünschte Position und Ausrichtung zum Verkleidungsbauteil gebracht werden. Weist die Sensoraufnahme die gewünschte Position und die Ausrichtung auf, muss nur abgewartet werden, bis dass der Klebstoff aushärtet und die Position und die Ausrichtung fixiert. Ein spezifisches Werkzeug wird nicht benötigt, was die Fertigung vereinfacht.

In einer weiteren Ausgestaltung ist der Klebstoff mittels einer äußeren Einwirkung aushärtbar. Die äußere Einwirkung kann dabei ein Schritt des Fertigungsverfahrens sein. Hierdurch kann der Beginn des Aushärteprozesses gewählt und der Aushärteprozess beschleunigt werden. Vor diesem Schritt ändert sich die Viskosität des Klebstoffs nicht, wohingegen nach dem Schritt die Aushärtung beginnt. Solange die Sensoraufnahme nicht wunschgemäß positioniert und ausgerichtet ist, ist die Viskosität des Klebstoffs so gewählt, dass er verformbar ist und Änderungen der Position und Ausrichtung der Sensoraufnahme zulässt. Sobald aber die gewünschte Position und die gewünschte Ausrichtung vorliegen, wird der Aushärteprozess gestartet, um die Position und Ausrichtung zu fixieren. Im Gegensatz zu einem Klebstoff, der direkt nach dem Auftragen beginnt auszuhärten, weist diese Ausgestaltung den Vorteil auf, dass der Beginn des Aushärteprozesses steuerbar ist. Die Fertigung wird insbesondere deshalb erleichtert, als dass vermieden werden kann, dass der Klebstoff die Sensoraufnahme in einer nicht erwünschten Position und Ausrichtung fixiert, was eine relativ zeitintensive Nacharbeitung erforderlich macht.

Es bietet sich an, wenn die äußere Einwirkung die Bestrahlung mittels einer Strahlenquelle und/oder die Zugabe eines Aushärtmittels und/oder die Einwirkung von Feuchtigkeit ist. Eine Strahlenquelle kann recht einfach in die Nähe des Klebstoffs gebracht und gut aktiviert und deaktiviert werden. Die Wellenlänge der von der Strahlenquelle ausgesendeten Strahlen wird auf den Klebstoff angepasst. Es kann sich dabei um Lichtstrahlen im sichtbaren Bereich, um Wärmestrahlen und/oder insbesondere um UV-Strahlen handeln. Auch die Zugabe eines Aushärtmittels ist aus fertigungstechnischer Sicht relativ einfach, da das Aushärtmittel mittels einer Dispensiereinrichtung, beispielsweise einer Kartusche, auf den Klebstoff aufgebracht werden kann, um den Aushärteprozess zu initiieren. Idealerweise ist die Dispensiereinrichtung in die Auftrageeinrichtung, mit welcher der Klebstoff aufgetragen wird, integriert. Der Klebstoff und das Aushärtmittel bilden ein Zweikompentensystem, beispielsweise Methylmethacrylat-Klebstoffe, die zweikomponentige Reaktionsklebstoffe sind, bei denen das eingesetzte Monomer Methylmethacrylat durch eine radikalische Kettenreaktion polymerisiert wird, die vom Aushärtmittel ausgelöst wird und die zur Aushärtung des Klebstoffs führt. Feuchtigkeit kann mittels einer Sprühpistole, die feine Wassertropfen erzeugt, auf den Klebstoff aufgebracht werden. Als Beispiel sei ein RTV-Silikon genannt, welches ein bei Raumtemperatur vernetzendes Silikon ist. Zur Vernetzung, die zur Aushärtung des Klebstoffs führt, wird etwas Wasser benötigt, was insbesondere tropfen- oder dampfförmig in der Nähe des Klebstoffs abgegeben wird. Bei allen Ausgestaltungen kann mit relativ einfachen Mitteln der Aushärteprozess zu einem wählbaren Zeitpunkt ausgelöst werden, was sich dann anbietet, wenn die Sensoraufnahme die gewünschte Position und Ausrichtung in Bezug auf das Verkleidungsbauteil eingenommen hat. Je schneller der Klebstoff aushärtet, desto kürzer ist die Fertigung des Verkleidungsbauteils und desto einfacher können die gewünschte Position und Ausrichtung fixiert werden.

In einer weiteren Ausgestaltung ist der Klebstoff segmentiert oder geschlossen um die Durchgangsöffnung auf das Verkleidungsbauteil und/oder auf die Sensoraufnahme aufgetragen. Unter einer segmentierten Auftragung soll verstanden werden, dass die Sensoraufnahme nicht mittels einer geschlossenen Klebenaht am Verkleidungsbauteil befestigt ist, sondern die Klebenaht unterbrochen ist. Bei entsprechender Wahl des verwendeten Klebstoffs genügt es, beispielsweise drei Klebpunkte vorzusehen, um die geforderten Abzugskräfte zu erreichen. Hierdurch kann die Menge des verwendeten Klebstoffs reduziert und die Auftragung des Klebstoffs auf das Verkleidungsbauteil vereinfacht werden. Wenn allerdings besonders hohe Abzugskräfte gefordert sind oder wenn der verwendete Klebstoff bei einer segmentierten Auftragung die geforderten Abzugskräfte nicht bereitstellen kann, kann eine geschlossene Klebenaht verwendet oder die Anzahl der Klebepunkte erhöht werden. Die Fertigung kann durch diese Eigenschaft des Klebstoffs flexibel gehalten werden.

In einer weiteren Ausgestaltung umfasst das Verkleidungsbauteil eine Entkopplungseinrichtung zum Entkoppeln der Sensoraufnahme oder des Sensors, wenn der Sensor in die Sensoraufnahme eingebracht ist. Da die Verkleidungsbauteile im Betrieb des Fahrzeugs häufig einer intensiven Staub- und Feuchtigkeitseinwirkung ausgesetzt sind, kann hierdurch die Durchgangsöffnung mit der Entkopplungseinrichtung abgedichtet werden. Dies ist insbesondere bei SUVs ein wichtiger Punkt, da diese für Fahrten im Gelände geeignet sind, wo die Staub- und Feuchtigkeitseinwirkungen deutlich stärker sind als im normalen Straßenverkehr. Zudem wird das optische Erscheinungsbild der Verkleidungsbauteile im Bereich der Durchgangsöffnungen verbessert, da keine störenden Spalte mit einem eventuell ungleichmäßigen Spaltmaß verbleiben.

Erfindungsgemäß ist vorgesehen, dass die Sensoraufnahme einen Kontaktbereich aufweist, in welchem die Sensoraufnahme mit dem Füll- und Befestigungsmittel zusammenwirkt, wobei die Sensoraufnahme zumindest im Kontaktbereich Vorsprünge, Ausnehmungen und/oder Bohrungen zum Vergrößern der Kontaktfläche mit dem Füll- und Befestigungsmittel aufweist. Je größer die Kontaktfläche zwischen dem Füll- und Befestigungsmittel und insbesondere dem Klebstoff, desto besser kann eine Position der Sensoraufnahme in Bezug auf das Verkleidungsbauteil beibehalten und fixiert und höhere Abzugskräfte erreicht werden. Die Vorsprünge, Ausnehmungen und/oder Bohrungen können so gewählt werden, dass Hinterschneidungen in Bezug auf die Längsachse der Sensoraufnahme entstehen, wodurch ein Formschluss entsteht und die Abzugskräfte nochmals erhöht werden. Die Zuverlässigkeit der Befestigung der Sensoranordnung am Verkleidungsbauteil wird hierdurch erhöht.

Ein weiterer Aspekt der vorliegenden Erfindung betrifft ein Fahrzeug, umfassend ein Verkleidungsbauteil nach einem der zuvor beschriebenen Ausführungsformen. Die Vorteile und technischen Effekte, die mit dem vorschlagsgemäßen Fahrzeug erreicht werden, entsprechen denjenigen, die für das Verkleidungsbauteil vorgestellt worden sind. Insbesondere soll an dieser Stelle erwähnt werden, dass es mit dem erfindungsgemäßen Verkleidungsbauteil möglich ist, die benötigte Anzahl unterschiedlicher Sensoraufnahmen deutlich zu reduzieren, da baugleiche Sensoraufnahmen für alle Stellen verwendet werden können, an denen Sensoren an den Verkleidungsbauteilen befestigt werden sollen. Folglich können der fertigungstechnische und logistische Aufwand reduziert und die Wahrscheinlichkeit des Einbaus von falschen Sensoraufnahmen verringert werden. Die Fertigung wird vereinfacht und die Befestigung der Sensoraufnahme am Verkleidungsbauteil zuverlässiger und dauerhafter.

Die Aufgabe wird ebenfalls durch ein Verfahren zum Befestigen und Ausrichten eines Sensors an einem Verkleidungsbauteil eines Fahrzeugs gelöst, welches folgende Schritte umfasst:
- Bereitstellen eines Verkleidungsbauteils eines Fahrzeugs,
- Versehen des Verkleidungsbauteils mit einer oder mehreren Durchgangsöffnungen mittels eines entsprechend eingerichteten Werkzeugs,
- Auftragen eines Füll- und Befestigungsmittels zumindest um eine der Durchgangsöffnungen mittels einer Auftrageeinrichtung,
- Anordnen einer Sensoraufnahme zumindest teilweise beabstandet vom Verkleidungsbauteil mit der gewünschten Ausrichtung in Bezug auf das Verkleidungsbauteil mittels einer Positionierungs- und Ausrichtungseinrichtung, wobei die Sensoraufnahme in einem Kontaktbereich mit dem Füll- und Befestigungsmittel zusammenwirkt, und
- Befestigen der Sensoraufnahme am Verkleidungsbauteil mit einem Füll- und Befestigungsmittel.

Der wesentliche Vorteil des vorschlagsgemäßen Verfahrens liegt darin, dass nur eine Variante der Sensoraufnahme für alle vorgesehenen Sensoren unabhängig von der Geometrie und vom Verlauf der Wölbung des Verkleidungsbauteils verwendet werden kann. Unterschiedliche Abstände zwischen der Sensoraufnahme und dem Verkleidungsbauteil werden vom Füll- und Befestigungsmittel ausgeglichen, wodurch es nicht notwendig ist, für jede Stelle, an welcher eine Sensoraufnahme am Verkleidungsbauteil befestigt werden soll, eine passende Sensoraufnahme zu verwenden. Die Gefahr, dass eine falsche Sensoraufnahme verbaut wird, ist beim vorschlagsgemäßen Verfahren nicht mehr gegeben. Gleichzeitig bewirkt das Füll- und Befestigungsmittel auch die Befestigung der Sensoraufnahme am Verkleidungsbauteil, so dass zusätzliche Schritte zum Befestigen nicht notwendig sind. Insbesondere müssen keine zusätzlichen Befestigungsabschnitte vorgesehen werden. Zudem sind keine zusätzlichen Werkzeuge notwendig, um die Sensoraufnahme am Verkleidungsbauteil zu befestigen.

Eine weitere Ausbildung des vorschlagsgemäßen Verfahrens umfasst den Schritt des Überprüfens der der Position und Ausrichtung der Sensoraufnahme mittels einer Prüfungseinrichtung. Dieser Schritt wird insbesondere dann durchgeführt, solange die Sensoraufnahme noch nicht endgültig am Verkleidungsbauteil befestigt ist und Korrekturen der Ausrichtung und Position der Sensoraufnahme noch möglich sind. Sobald die Prüfungseinrichtung festgestellt hat, dass die Sensoraufnahme wunschgemäß positioniert und ausgerichtet ist, kann die Sensoraufnahme mit dem des Füll- und Befestigungsmittel am Verkleidungsbauteil befestigt werden. Die Prüfungseinrichtung ermöglicht es, die Ausrichtung und Position der Sensoraufnahme in Bezug auf das Verkleidungsbauteil zu prüfen und gegebenenfalls eine Korrektur zu veranlassen, so dass nur Verkleidungsbauteile freigegeben werden, bei denen die Sensoraufnahme korrekt ausgerichtet und positioniert ist.

Das Verfahren wird dadurch weitergebildet, dass der Schritt des Veranlassens der äußeren Einwirkung durch Bestrahlen des Klebstoffs mit einer Strahlenquelle erfolgt. Hierzu muss die Strahlenquelle nur in die Nähe des Klebstoffs herangeführt und je nach Ausgestaltung aktiviert werden, was aus fertigungstechnischer Sicht ein relativ einfacher Schritt ist, da eine exakte Positionierung der Strahlenquelle in Bezug auf den Klebstoff nicht notwendig ist und dieselbe Strahlenquelle für alle Stellen, an denen eine Sensoraufnahme am Verkleidungsbauteil befestigt werden soll, verwendet werden kann. Die Wellenlänge der verwendeten Strahlen wird auf den verwendeten Klebstoff abgestimmt, wobei sich insbesondere eine Bestrahlung des Klebstoffs mit UV-Strahlen anbietet.

Das Verfahren wird dadurch weitergebildet, dass der Schritt des Veranlassens der äußeren Einwirkung durch Zugabe eines Aushärtmittels erfolgt. Auch dieser Schritt ist aus fertigungstechnischer Sicht relativ einfach, da dieselbe Dispensiereinrichtung für alle Stellen, an denen eine Sensoraufnahme am Verkleidungsbauteil befestigt werden soll, verwendet werden kann. Werkzeugwechsel sind nicht notwendig. Besonders einfach ist es, wenn die Dispensiereinrichtung in die Auftrageeinrichtung, mit welcher der Klebstoff auf das Verkleidungsbauteil aufgetragen wird, integriert ist. Insbesondere dann, wenn das Aushärtmittel im gasförmigen Aggregatszustand zugegeben werden kann, muss die Dispensiereinrichtung nicht besonders exakt in Bezug auf den Klebstoff positioniert werden.

Die Erfindung wird im Folgenden anhand von bevorzugten Ausführungsbeispielen unter Bezugnahme auf die anhängenden Zeichnungen im Detail beschrieben. Es zeigen
- Figur 1: ein erstes Ausführungbeispiel eines nicht zur Erfindung gehörenden Verkleidungsbauteils,
- Figur 2: ein zweites Ausführungsbeispiel eines nicht zur Erfindung gehörenden Verkleidungsbauteils,
- Figur 3: ein drittes Ausführungsbeispiel eines erfindungsgemäßen Verkleidungsbauteils,
- Figur 4: ein viertes Ausführungsbeispiel eines erfindungsgemäßen Verkleidungsbauteils, und
- Figur 5: a - e) die verschiedenen Schritte einer Ausführungsform eines erfindungsgemäßen Verfahrens zum Herstellen eines erfindungsgemäßen Verkleidungsbauteils, jeweils anhand von prinzipiellen Schnittdarstellungen.

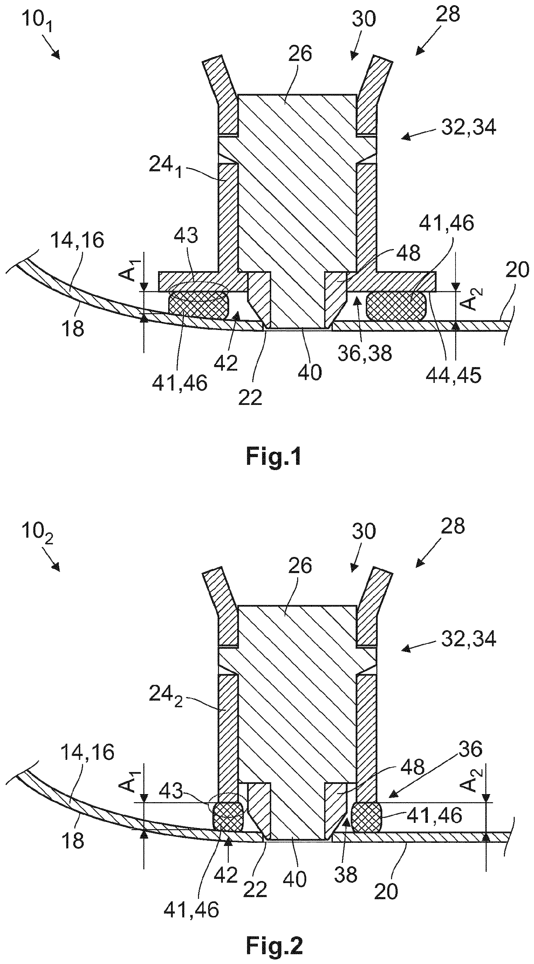

In Figur 1 ist eine erste Ausführungsform eines nicht zur Erfindung gehörenden Verkleidungsbauteils 10₁ eines nicht dargestellten Fahrzeugs anhand einer prinzipiellen Schnittdarstellung gezeigt. Im dargestellten Beispiel ist das Verkleidungsbauteil 10₁ als ein Stoßfänger 14 ausgebildet ist. Der Stoßfänger 14 weist eine Wandung 16 mit einer bestimmten Wölbung auf. Die Wandung 16 umfasst eine äußere Oberfläche 18, die von außen her sichtbar ist und die üblicherweise in der Farbe des Fahrzeugs lackiert ist. Weiterhin umfasst die Wandung 16 eine von außen hier nicht sichtbare innere Oberfläche 20, die üblicherweise nicht lackiert ist. Ferner ist eine Durchgangsöffnung 22 vorhanden, welche die Wandung 16 vollständig durchdringt und die einen kreisförmigen oder auch ovalen Querschnitt aufweist.

Das Verkleidungsbauteil 10₁ umfasst weiterhin eine Sensoraufnahme 24₁ nach einem ersten Ausführungsbeispiel, die einen im Wesentlichen hohlzylindrischen Körper bildet. In den von der Sensoraufnahme 24₁ umschlossenen Hohlraum ist ein Sensor 26 eingebracht, mit welchem die Umgebung des Fahrzeugs auf stationäre und/oder sich bewegende Gegenstände hin überwacht werden kann. An einem ersten Ende 28 weist der hohlzylindrische Körper der Sensoraufnahme 24₁ eine sich erweiternde Aufnahmeöffnung 30 auf, über welche der Sensor 26 in den Hohlraum eingebracht werden kann. Zur Positionierung und Befestigung des Sensors 26 in der Sensoraufnahme 24₁ weist der Sensor 26 Befestigungsvorsprünge 32 auf, die in entsprechende Befestigungsausnehmungen 34 der Sensoraufnahme 24₁ eingreifen. An einem zweiten Ende 36 weist die Sensoraufnahme 24₁ eine weitere Öffnung 38 auf, über welche ein freies Ende 40 des Sensors 26 hervorragt. Zumindest im Bereich des freien Endes 40 weist der Sensor 26 einen kreisförmigen Querschnitt auf.

Die Sensoraufnahme 24₁ ist unter Ausbildung eines Freiraums 42 beabstandet vom Stoßfänger 14 so angeordnet, dass das freie Ende 40 des Sensors 26 konzentrisch zur Durchgangsöffnung 22 angeordnet ist und von der Durchgangsöffnung 22 umschlossen wird. Die Sensoraufnahme 24₁ steht nicht in direkten Kontakt mit dem Stoßfänger 14. Es ist aber durchaus möglich, dass die Sensoraufnahme 24₁ an einer oder mehreren Stellen punkt- oder linienförmig mit dem Stoßfänger 14 in Kontakt tritt, wobei immer ein Freiraum 42 ausgebildet wird. Der Freiraum 42 wird mittels eines Füll- und Befestigungsmittels 41 ausgefüllt, welches auf dem Stoßfänger 14 um die Durchgangsöffnung 22 herum angeordnet oder aufgetragen ist und in einem Kontaktbereich 43 mit der Sensoraufnahme 24₁ in Kontakt tritt. Zum Vergrößern der Kontaktfläche weist die Sensoraufnahme 24₁ am zweiten Ende 36 einen Fügeflansch 44 auf, der eine ebene, ringförmige Fläche 45 bildet.

Aufgrund der Geometrie des Stoßfängers 14 und insbesondere seiner Wölbung ändert sich der Abstand zwischen der inneren Oberfläche 20 des Stoßfängers 14 und der Sensoraufnahme 24₁. Beispielhaft ist in Figur 1 zum einen ein erster Abstand A₁ am linken äußeren Ende und zum anderen ein zweiter Abstand A₂ am rechten äußeren Ende des Freiraums 42 dargestellt. Aufgrund der Geometrie des Stoßfängers 14 ist der erste Abstand A₁ kleiner als der zweite Abstand A₂. Das Füll- und Befestigungsmittel 41 ist so gewählt, dass es in der Lage ist, den sich ändernden Abstand auszugleichen, so dass es nicht notwendig ist, die Sensoraufnahme 24₁ und insbesondere den Fügeflansch 44 an die Geometrie des Stoßfängers 14 anzupassen.

Weiterhin umfasst das Verkleidungsbauteil 10₁ ein Füll- und Befestigungsmittel 46, mit welchem die Sensoraufnahme 24₁ am Stoßfänger 14 befestigt ist. Im dargestellten Beispiel ist das Füll- und Befestigungsmittel 41 als ein Klebstoff 46 ausgebildet, so dass das Füll- und Befestigungsmittel 41 gleichzeitig auch das Füll- und Befestigungsmittel 46 darstellt.

Um den Stoßfänger 14 gegenüber dem Sensor 26 zu entkoppeln, ist eine Entkopplungseinrichtung 48, hier in Form eines Entkopplungsrings, vorgesehen. Die Entkopplungseinrichtung 48 verjüngt sich zu ihrem freien Ende hin und kann auch die Durchgangsöffnung 22 abdichten.

In Figur 2 ist ein zweites Ausführungsbeispiel des nicht zur Erfindung gehörenden Verkleidungsbauteils 10₂ dargestellt. Sie gleicht in weiten Teilen dem ersten Ausführungsbeispiel, allerdings umfasst sie eine zweite Ausführungsform der Sensoraufnahme 24₂. Der wesentliche Unterschied zwischen der ersten und der zweiten Ausführungsform ist, dass die Sensoraufnahme 24₂ am zweiten Ende 36 keinen Fügeflansch 44 aufweist, so dass der Kontaktbereich 43 im Wesentlichen von einer Stirnfläche und von den Flächen des hohlzylindrischen Körpers der Sensoraufnahme 24₂ gebildet wird, die sich der Stirnfläche unmittelbar anschließen. Im zweiten Ausführungsbeispiel ist die Sensoraufnahme 24₂ sehr einfach und materialsparend geformt. Da kein Fügeflansch 44 vorhanden ist, kann die Sensoraufnahme 24₂ auch an Stellen des Stoßfängers 14 anagebracht werden, die eine sehr starke Wölbung aufweisen und wo der Fügeflansch 44 an die innere Oberfläche 20 des Stoßfängers 14 anstoßen und daher stören würde.

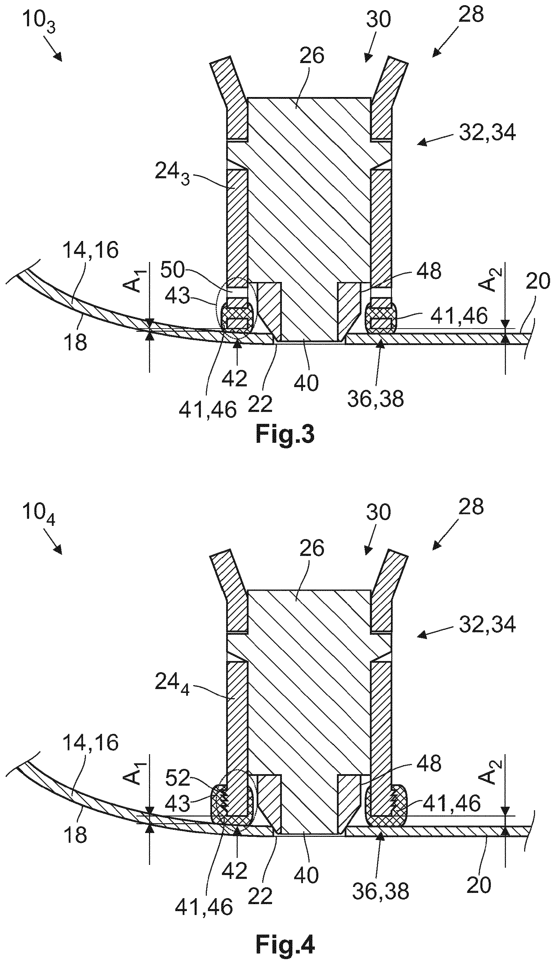

In Figur 3 ist ein drittes Ausführungsbeispiel des erfindungsgemäßen Verkleidungsbauteils 10₃ dargestellt, die eine Sensoraufnahme 24₃ nach einer dritten Ausführungsform aufweist. Die Sensoraufnahme 24₃ nach der dritten Ausführungsform gleicht weitgehend der Sensoraufnahme 24₂ nach der zweiten Ausführungsform, allerdings weist sie im Bereich des zweiten Endes 36 Bohrungen 50 auf, in welche der Klebstoff 46 eindringen kann, wodurch die Kontaktfläche zwischen dem Klebstoff 46 und der Sensoraufnahme 24₁ vergrößert und eine Hinterschneidung erzeugt wird. Die Bohrungen 50 können auch als Ausnehmungen ausgestaltet sein. Hierdurch wird ein Formschluss erzeugt und die Befestigung der Sensoraufnahme 24₁ am Stoßfänger 14 gestärkt, so dass höhere Abzugskräfte realisiert werden können.

In Figur 4 ist ein viertes Ausführungsbeispiel des erfindungsgemäßen Verkleidungsbauteils 10₄ dargestellt, die eine Sensoraufnahme 24₄ nach einer vierten Ausführungsform aufweist. Die Sensoraufnahme 24₄ nach der vierten Ausführungsform gleicht weitgehend der Sensoraufnahme 24₂ nach der zweiten Ausführungsform, allerdings weist sie im Bereich des zweiten Endes 36 mehrere Vorsprünge 52 auf, die in der in Figur 4 verwendeten Schnittebene eine Sägezahnkurve bilden. Auch hierdurch wird die Kontaktfläche zwischen dem Klebstoff 46 und der Sensoraufnahme 24₄ vergrößert und eine Hinterschneidung erzeugt. Hierdurch wird ein Formschluss erzeugt und die Befestigung der Sensoraufnahme 24₄ am Stoßfänger 14 gestärkt, so dass höhere Abzugskräfte realisiert werden können.

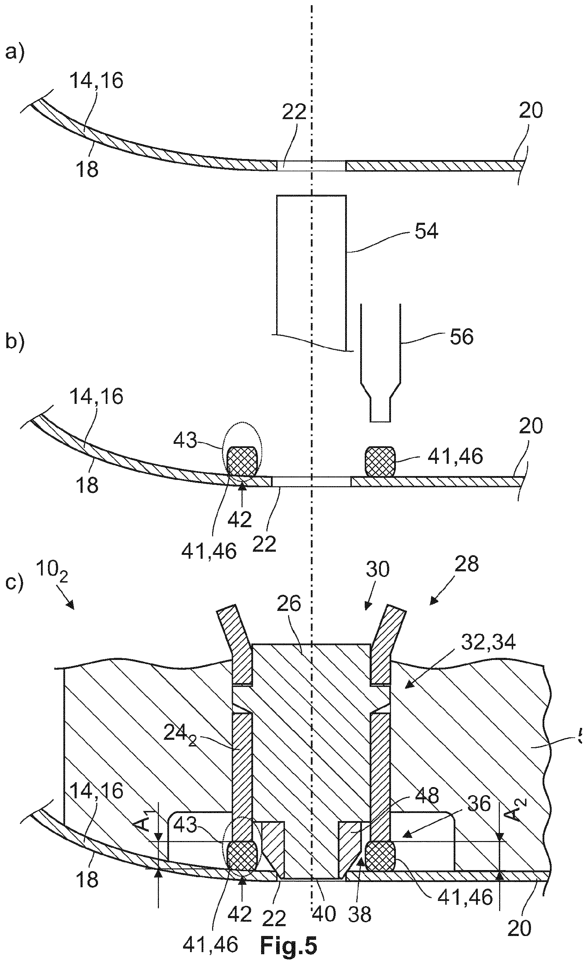

In den Figuren 5a) bis 5e) sind die verschiedenen Schritte einer Ausführungsform eines vorschlagsgemäßen Verfahrens zur Herstellung des Verkleidungsbauteils 10₂ nach dem zweiten Ausführungsbeispiel (vgl. Figur 2) prinzipiell dargestellt. Zunächst wird die Durchgangsöffnung 22 mittels eines entsprechend ausgebildeten Werkzeugs 54 gefertigt, beispielsweise mit einer Stanz- oder Bohrvorrichtung (Figur 5a)). Anschließend wird das Füll- und Befestigungsmittel 41, in diesem Fall der Klebstoff 46, mittels einer Auftrageeinrichtung 56 um die Durchgangsöffnung 22 herum aufgetragen, wobei der Klebstoff 46 geschlossen oder segmentiert und insbesondere punktweise um die Durchgangsöffnung 22 herum aufgetragen werden kann (Figur 5b)). Danach wird die Sensoraufnahme 24₂ mittels einer Positionierungs- und Ausrichtungsvorrichtung 58, in die gewünschte Position und Ausrichtung in Bezug auf den Stoßfänger 14 gebracht, wobei das zweite Ende 36 der Sensoraufnahme 24₂ im Kontaktbereich 43 mit dem Klebstoff 46 in Kontakt tritt. Da der Klebstoff 46 bei diesem Schritt noch weich und verformbar ist, kann das zweite Ende 36 mehr oder weniger stark in den Klebstoff 46 eintauchen. Beim Positionieren und Ausrichten kann der Sensor 26 bereits in die Sensoraufnahme 24₂ eingebracht und die Abdichteinrichtung 48 um das freie Ende 40 des Sensors 26 angeordnet sein. Die Entkopplungseinrichtung 48 hilft bei der Positionierung und der Ausrichtung, da sie durch ein entsprechendes Zusammenwirken mit der Durchgangsöffnung 22 als Zentrierhilfe und als Anschlag wirkt (Figur 5c)). Die Entkopplungseinrichtung 48 trägt dazu bei, dass es nicht notwendig ist, einen Positionierstempel an der äußeren Oberfläche 18 als Anschlag zu verwenden, um die Sensoraufnahme 24₂ und den Sensor korrekt in Bezug auf den Stoßfänger 14 zu positionieren. Die Verwendung eines Positionierstempels ist insbesondere dann von Nachteil, wenn die äußere Oberfläche 18 bereits lackiert ist. In diesem Fall könnte eine Berührung des Positionierstempels mit der äußeren Oberfläche 18 zu Lackschäden führen.

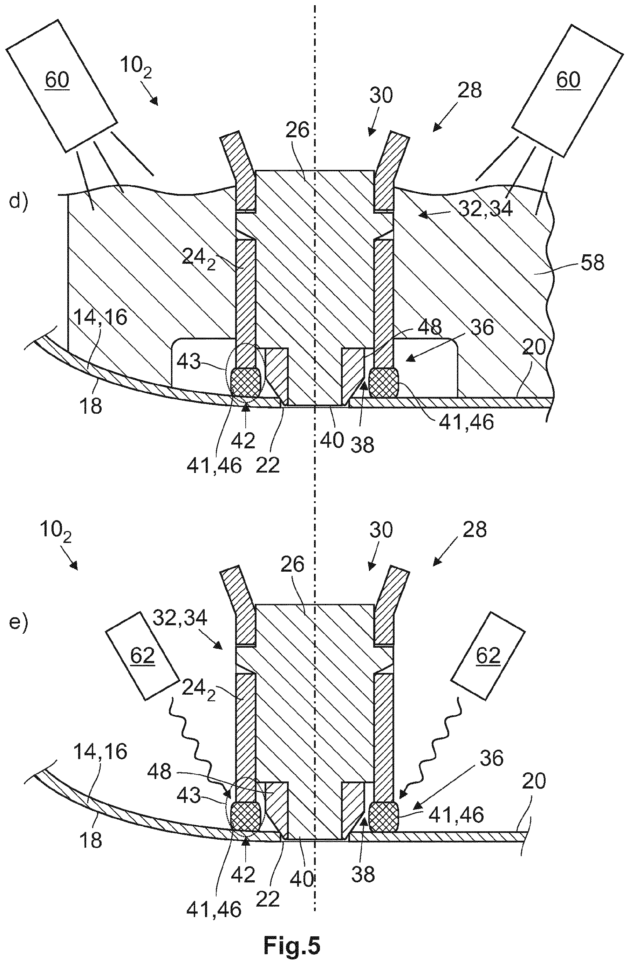

Mittels einer Prüfungseinrichtung 60 wird geprüft, ob sich die Sensoraufnahme 24₁ in der gewünschten Position in Bezug auf den Stoßfänger 14 befindet und die gewünschte Ausrichtung aufweist (Figur 5d)). Ist dies nicht der Fall, wird das Fügeverfahren abgebrochen. Die Positionierungs- und Ausrichtungsvorrichtung 58 wird entfernt, sobald der Klebstoff 46 durch eine äußere Einwirkung ausgehärtet ist. Im dargestellten Beispiel wird dies mit einer Strahlenquelle 62 umgesetzt, wobei der Klebstoff 46 insbesondere mittels UV-Strahlung ausgehärtet wird (Figur 5e)). Die Ausrichtung und die Position der Sensoraufnahme 24₂ und folglich des Sensors 26 in Bezug auf den Stoßfänger 14 sind nun fixiert und das Verkleidungsbauteil 10₂ fertiggestellt.

Die erfindungsgemäße Verkleidungsbauteil 10 und das erfindungsgemäße Verfahren ermöglichen es, das Verkleidungsbauteil 10 bereits beim Zulieferer mit den gewünschten Sensoren 26 zu versehen und im fertig montierten Zustand an das Band zu liefern, wo die Sensoren 26 nur noch an die Verkabelung des Fahrzeug angeschlossen und das Verkleidungsbauteil 10 am Fahrzeug befestigt werden muss, wodurch die Montage des betreffenden Fahrzeugs im Vergleich zu herkömmlichen Verkleidungsbauteilen vereinfacht und verkürzt und damit kostengünstiger wird. Selbiges gilt auch für den Austausch von im Betrieb des Fahrzeugs beschädigter Verkleidungsbauteile 10. Das neue Verkleidungsbauteil 10 kann ebenfalls mit den Sensoren 26 versehen sein, die auf die oben genannte Weise am Verkleidungsbauteil 10 befestigt sind. Die Reparaturwerkstatt muss das Verkleidungsbauteil 10 gegebenenfalls lackieren, die Sensoren 26 verkabeln und das Verkleidungsbauteil 10 am Fahrzeug anbringen. Eine manuelle Befestigung der Sensoren 26 am Verkleidungsbauteil 10 durch die Reparaturwerkstatt entfällt.

### Bezugszeichenliste

- 10, 10₁ - 10₄: Verkleidungsbauteil
- 14: Stoßfänger
- 16: Wandung
- 18: äußere Oberfläche
- 20: innere Oberfläche
- 22: Durchgangsöffnung
- 24, 24₁ - 24₄: Sensoraufnahme
- 26: Sensor
- 28: erstes Ende
- 30: Aufnahmeöffnung
- 32: Befestigungsvorsprung
- 34: Befestigungsausnehmung
- 36: zweites Ende
- 38: weitere Öffnung
- 40: freies Ende
- 41: Füll- und Befestigungsmittel
- 42: Freiraum
- 43: Kontaktbereich
- 44: Fügeflansch
- 45: ringförmige Fläche
- 46: Klebstoff
- 48: Entkopplungseinrichtung, Entkopplungsring
- 50: Bohrung
- 52: Vorsprung
- 54: Werkzeug
- 56: Auftrageeinrichtung
- 58: Positionierungs- und Ausrichtungsvorrichtung
- 60: Prüfungseinrichtung
- 62: Strahlenquelle
- A₁: erster Abstand
- A₂: zweiter Abstand

## Patentansprüche

1. Verkleidungsbauteil für ein Fahrzeug, umfassend
- eine oder mehrere Durchgangsöffnungen (22),
- eine oder mehrere Sensoraufnahmen (24) zum Aufnehmen eines Sensors (26),
- wobei die Durchgangsöffnungen (22) im Bereich einer Wölbung des Verkleidungsbauteils angeordnet sind,
**dadurch gekennzeichnet, dass**
- die Sensoraufnahme(n) (24) unter Ausbildung eines Freiraums (42) zumindest teilweise beabstandet vom Verkleidungsbauteil (12) im Bereich einer der Durchgangsöffnungen (22) angeordnet sind, und dass
- das Verkleidungsbauteil weiterhin umfasst ein Füll-und Befestigungsmittel (41) zum Auffüllen des Freiraums (42) im Bereich der Wölbung zwischen dem Verkleidungsbauteil (12) und der Sensoraufnahme (24), zum Ausrichten der Sensoraufnahme (24) in Bezug auf das Verkleidungsbauteil (12) sowie zum Befestigen der Sensoraufnahme (24) am Verkleidungsbauteil (12),
- wobei durch eine entsprechende Verformung des Füll-und Befestigungsmittels (41) geometriebedingte Abstandsunterschiede der Sensoraufnahme (24) zum Verkleidungsbauteil (12) ausgeglichen werden, so dass baugleiche Sensoraufnahmen (24) für alle Verkleidungsbauteile (12) unabhängig vom Verlauf ihrer Wölbung und unabhängig von der Stelle, an welcher die Sensoraufnahme (24) am Verkleidungsbauteil (12) befestigt werden soll, verwendet werden können, und
- die Sensoraufnahme (24) einen Kontaktbereich (43) aufweist, in welchem die Sensoraufnahme (24) mit dem Füllmittel (41) zusammenwirkt, wobei die Sensoraufnahme (24) zumindest im Kontaktbereich (43) Vorsprünge (52), Ausnehmungen und/oder Bohrungen (50) zum Vergrößern der Kontaktfläche mit dem Füllmittel (41) aufweist.

2. Verkleidungsbauteil nach Anspruch 1,
**dadurch gekennzeichnet, dass**
das Füll- und Befestigungsmittel (41) als ein Klebstoff (46) ausgebildet ist oder Klebstoff (46) umfasst.

3. Verkleidungsbauteil nach Anspruch 2,
**dadurch gekennzeichnet, dass**
der Klebstoff (46) mittels einer äußeren Einwirkung aushärtbar ist.

4. Verkleidungsbauteil nach Anspruch 3,
**dadurch gekennzeichnet, dass**
die äußere Einwirkung die Bestrahlung mittels einer Strahlenquelle (62) und/oder die Zugabe eines Aushärtmittels und/oder die Einwirkung von Feuchtigkeit ist.

5. Verkleidungsbauteil nach einem der Ansprüche 2 bis 4,
**dadurch gekennzeichnet, dass**
der Klebstoff (46) segmentiert oder geschlossen um die Durchgangsöffnung auf das Verkleidungsbauteil (12) und/oder auf die Sensoraufnahme (24) aufgetragen ist.

6. Verkleidungsbauteil nach einem der vorherigen Ansprüche,
**dadurch gekennzeichnet, dass**
das Verkleidungsbauteil (10) eine Entkopplungseinrichtung (48) zum Entkoppeln der Sensoraufnahme (24) oder des Sensors (26), wenn der Sensor (26) in die Sensoraufnahme (24) eingebracht ist,
umfasst.

7. Fahrzeug, umfassend ein Verkleidungsbauteil (10) nach einem der vorherigen Ansprüche.

8. Verfahren zum Befestigen und Ausrichten eines Sensors (26) und/oder einer Sensoraufnahme (24) an einem Verkleidungsbauteil (12) eines Fahrzeugs, umfassend folgende Schritte:
- Bereitstellen eines Verkleidungsbauteils (12) für Fahrzeug, wobei das Verkleidungsbauteil (12) eine Wölbung aufweist,
- Versehen des Verkleidungsbauteils (12) mit einer oder mehreren Durchgangsöffnungen (22) mittels eines entsprechend eingerichteten Werkzeugs (54) im Bereich der Wölbung,
- Auftragen eines Füll- und Befestigungsmittels (41) zumindest um eine der Durchgangsöffnungen (22) mittels einer Auftrageeinrichtung (56), wobei das Füll- und Befestigungsmittel aus einem mittels einer äußeren Einwirkung aushärtbaren Klebstoff (46) besteht oder diesen umfasst,
- Anordnen einer Sensoraufnahme (24) zumindest teilweise beabstandet vom Verkleidungsbauteil (12) mit der gewünschten Ausrichtung in Bezug auf das Verkleidungsbauteil (12) mittels einer Positionierungs- und Ausrichtungseinrichtung (58), wobei die Sensoraufnahme (24) in einem Kontaktbereich (43) mit dem Füllmittel (41) zusammenwirkt, und
- Aushärten des Klebstoffs (46) durch Veranlassen der äußeren Einwirkung auf den Klebstoff (46) mittels einer Aushärteinrichtung.

9. Verfahren nach Anspruch 8, umfassend folgenden Schritt:
- Überprüfen der Position und Ausrichtung der Sensoraufnahme (24) mittels einer Prüfungseinrichtung (60) .

10. Verfahren nach Anspruch 9,
**dadurch gekennzeichnet, dass**
der Schritt des Veranlassens der äußeren Einwirkung durch Bestrahlen des Klebstoffs (46) mit einer Strahlenquelle (62) erfolgt.

11. Verfahren nach Anspruch 9,
**dadurch gekennzeichnet, dass**
der Schritt des Veranlassens der äußeren Einwirkung durch Zugabe eines Aushärtmittels erfolgt.

## Claims

1. Cladding component for a vehicle, comprising:
- one or more passage openings (22),
- one or more sensor holders (24) for holding a sensor (26),
- wherein the passage openings (22) are arranged in the region of a curvature of the cladding component,
**characterised in that**
- the sensor holder(s) (24) are arranged in the region of one of the passage openings (22) and at least partially spaced from the cladding component (12) so as to form a free space (42), and
- the cladding component furthermore comprises a filling and fixing agent (41) for filling the free space (42) between the cladding component (12) and the sensor holder (24) in the region of the curvature, for aligning the sensor holder (24) relative to the cladding component (12) and for securing the sensor holder (24) to the cladding component (12),
- whereby by a corresponding deformation of the filling and fixing agent (41) due to the geometry spacing differences of the sensor holder (24) relative to the cladding component (12) can be compensated for, so that structurally identical sensor holders (24) can be used for all cladding components (2) regardless of the configuration of their curvature and regardless of the location at which the sensor holder (24) is to be fixed to the cladding component (12), and
- the sensor holder (24) has a contact region (43) in which the sensor holder (24) cooperates with the filling agent (41), wherein the sensor holder (24) has protrusions (52), recesses and/or bores (50) at least in the contact region (43) for enlarging the contact area with the filling agent (41).

2. Cladding component according to claim 1, **characterised in that** the filling and fixing agent (41) is formed as an adhesive (46) or comprises adhesive (46).

3. Cladding component according to claim 2, **characterised in that** the adhesive (46) can be hardened by means of an external influence.

4. Cladding component according to claim 3, **characterised in that** the external influence is radiation by means of a radiation source (62) and/or the addition of a hardening agent and/or the influence of moisture.

5. Cladding component according to any of claims 2 to 4, **characterised in that** the adhesive (46) is applied to the cladding component (12) and/or to the sensor holder (24) in a segmented fashion or closed around the passage opening.

6. Cladding component according to any of the preceding claims, **characterised in that** the cladding component (10) comprises a decoupling device (48) for decoupling the sensor holder (24) or sensor (26) if the sensor (26) has been inserted in the sensor holder (24).

7. Vehicle comprising a cladding component (10) according to any of the preceding claims.

8. Method for securing and aligning a sensor (26) and/or a sensor holder (24) on a cladding component (12) of the vehicle, comprising the following steps:
- provision of a cladding component (12) for a vehicle, wherein the cladding component (12) has a curvature,
- providing the cladding component (12) with one or more passage openings (22) in the region of the curvature by means of a correspondingly configured tool (54),
- application of a filling and fixing agent (41) at least around one of the passage openings (22) by means of an application device (56), wherein the filling and fixing agent consists of or comprises an adhesive (46) which can be hardened by means of an external influence,
- arrangement of a sensor holder (24) at least partially spaced from the cladding component (12) and with the desired alignment relative to the cladding component (12) by means of a positioning and alignment device (58), wherein the sensor holder (24) cooperates with the filling agent (41) in a contact region (43), and
- hardening of the adhesive (46) by causing the external influence on the adhesive (46) by means of a hardening device.

9. Method according to claim 8, comprising the following step:
- checking the position and alignment of the sensor holder (24) by means of a test device (60).

10. Method according to claim 9, **characterised in that** the step of causing the external influence takes place by irradiating the adhesive (46) with a radiation source (62).

11. Method according to claim 9, **characterised in that** the step of causing the external influence takes place by adding a hardening agent.

## Revendications

1. Composant d'habillage destiné à un véhicule comprenant :
- au moins une ouverture de passage (22),
- au moins un logement (24) de réception d'un capteur (26),
- les ouvertures de passage (22) étant situées dans la zone d'une courbure du composant d'habillage,
**caractérisé en ce que**
- le(les) logement(s) de réception d'un capteur (24) sont situés au moins partiellement à distance du composant d'habillage (12) en formant un volume libre (42), dans la zone de l'une des ouvertures de passage (22), et
- le composant d'habillage comprend en outre des moyens de remplissage et de fixation (41) permettant de remplir le volume libre (42) dans la zone de la courbure entre le composant d'habillage (12) et le logement de réception d'un capteur (24) pour permettre d'orienter le logement de réception d'un capteur (24) par rapport au composant d'habillage (12) ainsi que de fixer le logement d'un capteur (24) sur le composant d'habillage (12),
- la déformation correspondante du moyen de remplissage et de fixation (41) est compensé par des différences de distance d'origine géométrique du logement de capteur (24) par rapport au composant d'habillage (12) de façon que les logements de capteur (24) de construction analogue puissent être utilisés pour tous les composants d'habillage (12), indépendamment du tracé de leur courbure et indépendamment de l'emplacement auquel doit être fixé le logement de capteur (24) au composant d'habillage (12), et
- le logement de réception d'un capteur (24) comporte une zone de contact (43) dans laquelle il coopère avec les moyens de remplissage (41), le logement de réception d'un capteur (24) comportant, au moins dans la zone de contact (43) des saillies (52), des évidements et/ou des perçages (50) permettant d'augmenter la surface de contact avec les moyens de remplissage (41).

2. Composant d'habillage conforme à la revendication 1,
**caractérisé en ce que**
les moyens de remplissage et de fixation (41) sont réalisés sous la forme d'un adhésif (46) ou renferment un adhésif (46).

3. Composant d'habillage conforme à la revendication 2,
**caractérisé en ce que**
l'adhésif (46) peut être durci par une action externe.

4. Composant d'habillage conforme à la revendication 3,
**caractérisé en ce que**
l'action externe est une irradiation au moyen d'une source de rayonnement (62) et/ou l'addition d'un agent de durcissement et/ou l'action de humidité.

5. Composant d'habillage conforme à l'une des revendications 2 à 4,
**caractérisé en ce que**
l'adhésif (46) est appliqué sur le composant d'habillage (12) et/ou le logement de réception d'un capteur (24) en étant segmenté ou fermé autour des ouvertures de passage.

6. Composant d'habillage conforme à l'une des revendications précédentes,
**caractérisé en ce que**
le composant d'habillage (10) comporte un dispositif de découplage (48) pour découpler le logement d'un capteur (24) ou le capteur (26) lorsque le capteur (26) est introduit dans le logement de capteur (24).

7. Véhicule comportant un composant d'habillage (10) conforme à l'une des revendications précédentes.

8. Procédé permettant de fixer et d'orienter un capteur (26) et/ou un logement de réception d'un capteur (24) sur un composant d'habillage (12) d'un véhicule, comprenant les étapes suivantes consistant à :
- se procurer un composant d'habillage (12) d'un véhicule, ce composant d'habillage (12) ayant une courbure,
- équiper le composant d'habillage (12) d'une ou de plusieurs ouverture(s) de passage (22) au moyen d'un outil orienté en conséquence (54) dans la zone de la courbure,
- appliquer des moyens de remplissage et de fixation (41) au moins autour de l'une des ouvertures de passage (22) au moyen d'un dispositif d'application (56), les moyens de remplissage et de fixation étant constitués d'un adhésif (46) durcissable sous l'influence d'une action externe, ou renfermant un tel adhésif,
- positionner un logement de réception d'un capteur (24) au moins partiellement à distance du composant d'habillage (12) avec l'orientation souhaitée par rapport à ce composant d'habillage (12) au moyen d'un dispositif de positionnement et d'orientation (58),
- le logement de réception d'un capteur (24) coopérant avec les moyens de remplissage (41) dans une zone de contact (43), et
- faire durcir l'adhésif (46) sous l'influence de l'action externe sur cet adhésif (46) au moyen d'un dispositif de durcissement.

9. Procédé conforme à la revendication 8,
comportant l'étape suivante consistant à :
contrôler la position et l'orientation du logement de réception d'un capteur (24) au moyen d'un dispositif de contrôle (60).

10. Procédé conforme à la revendication 9,
**caractérisé en ce que**
l'étape de mise en œuvre de l'action externe consiste à irradier l'adhésif (46) avec une source de rayonnement (62).

11. Procédé conforme à la revendication 9,
**caractérisé en ce que**
l'étape de mise en œuvre de l'action externe consiste à ajouter un agent de durcissement.
